# EUROPEAN PATENT APPLICATION

(11) **EP 3 343 397 A1**
(43) Date of publication of application: **04.07.2018**
(21) Application number: 16839284.3
(22) Date of filing: 23.08.2016
(51) Int. Cl.: G06F 17/30

(54) **INFORMATION PROCESSING APPARATUS, INFORMATION PROCESSING METHOD, AND PROGRAM**

(30) Priority: 24.08.2015 JP 2015164558
(71) Applicant: Assemblogue, Inc., Tokyo 100-6208 (JP)
(72) Inventor: HASIDA, Koiti, Tokyo 100-6208 (JP)
(74) Representative: Fleuchaus, Michael A.
(86) International application number: PCT/JP2016/074534
(87) International publication number: WO 2017/033937

(57) **Abstract**

Matching of terms of data use is performed between the data provider and the data user. An information processing device comprises: a data processing module that processes data; an acquisition unit that acquires processing-object data provided with use-policy data indicating a data-use term prescribed by a data provider; a storage unit that stores use-specification data indicating a data-use term for data that can be processed by the processing module; and a determination unit that, based on the use-policy data and the use-specification data, determines whether or not the acquired processing-object data can be processed by the processing module, and the processing module processes the processing-object data determined by the determination unit as processable.

## Description

### Technical Field

The present invention relates to an information processing device, an information processing method and a program.

### Background Art

Conventionally, DRM (digital rights management) has been used for preventing unlimited use of contents in electronic devices, for example, movies, music and novels (see, for example, Non Patent Literature 1).

### Citation List

### Non Patent Literature

Non Patent Literature 1: "DRM [digital rights management] IT Term Dictionary e-Words", online, retrieved on August 24, 2015, Internet URL: http://e-words.jp/w/DRM.html

### Summary of Invention

### Technical Problem

However, in conventional DRM, the data provider unilaterally prescribes data-use terms and it is not assumed that the data user presents desired use terms. Therefore, matching of data-use terms cannot be performed between the data provider and the data user, resulting in a failure to establish a data-transaction market .

Therefore, predetermined aspects of the present invention have been made in view of the above problem and enables matching of terms of data use between the data provider and the data user.

### Solution to Problem

An information processing device according to an aspect of the present invention comprises: a data processing module that processes data; an acquisition unit that acquires object data to process with use-policy data indicating a data-use term prescribed by the data provider; a storage unit that stores use-specification data indicating a data-use term for data that can be processed by the processing module; and a determination unit that determines, based on the use-policy data and the use-specification data, whether or not the acquired object data can be processed by the processing module, and the processing module processes the data determined by the determination unit as processable.

Also, an information processing method according to another aspect of the present invention comprises the following steps executed by a computer: an acquisition step of acquiring object data with use-policy data indicating a data-use term prescribed by a data provider; a determination step of determining, based on the use-policy data and use-specification data indicating a data use term for data that can be processed by a processing module, whether or not the acquired processing-object data can be processed by the processing module, where the use specification data is acquired from a storage unit that stores the use specification data; and a processing step of processing the object data determined as processable.

Also, a program according to another aspect of the present invention causes a computer to perform: an acquisition step of acquiring object data with use-policy data indicating a data-use term prescribed by a data provider; a determination step of determining, based on the use-policy data and use-specification data indicating a data use term for data that can be processed by a processing module, whether or not the acquired processing-object data can be processed by the processing module, where the use specification data is acquired from a storage unit that stores the use specification data; and a processing step of processing the object data determined as processable.

### Brief Description of Drawings

[Figure 1] Figure 1 is a diagram illustrating an example of a schematic configuration of an information processing system according to an embodiment.
[Figure 2] Figure 2 is a block diagram illustrating an example of a schematic configuration of hardware in an information processing device according to the embodiment.
[Figure 3] Figure 3 is a block diagram illustrating an example of a functional configuration of the information processing device according to the embodiment.
[Figure 4] Figure 4 is a diagram illustrating examples of data-use terms.
[Figure 5] Figure 5 is a flowchart illustrating an example of processing in the information processing device according to the embodiment.

### Description of Embodiment

An embodiment of the present invention will be described in detail below with reference to the accompanying drawings. First, definitions of terms will be provided.

"Module" refers to an artificial object having a data processing function, the artificial object being hardware or software or a combination thereof. "Use policy" refers to data-use terms prescribed by a data provider, and it is supposed that each piece of data is provided with some use policy. Also, "use specifications for a module M" refer to data-use terms for a module M to correctly process data, which are prescribed by, e.g., a developer of the module.

### [Embodiment]

### <System configuration>

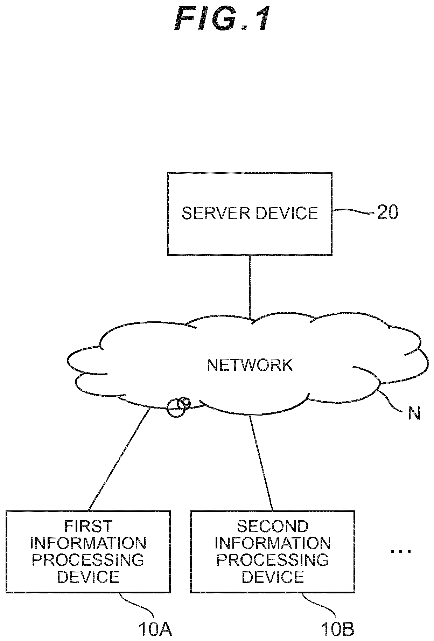

Figure 1 is a diagram illustrating an example of a schematic configuration of an information processing system 1 according to an embodiment. In the information processing system 1 illustrated in Figure 1, for example, a first information processing device 10A, a second information processing device 10B and a server device 20 are connected via a wired or wireless network N such as a broadband line.

The first information processing device 10A is, for example, a PC (personal computer), and processes data. The second information processing device 10B is, for example, a smartphone, and processes data. For the information processing devices, reference numeral 10 is used where it is not necessary to distinguish therebetween.

The server device 20 is, for example, a PC, and upon being accessed by the first information processing device 10A or the second information processing device 10B, receives and holds data or transmits held data.

Also, the server device 20 stores DRM object data. Examples of the DRM object data include, e.g., audio data such as music, video data such as movies, text data such as books, medical/nursing care/health data, purchase data and location/behavioral data. Here, each of the first information processing device 10A and the second information processing device 10B may be the provider and a user of the DRM object data.

### <Hardware configuration>

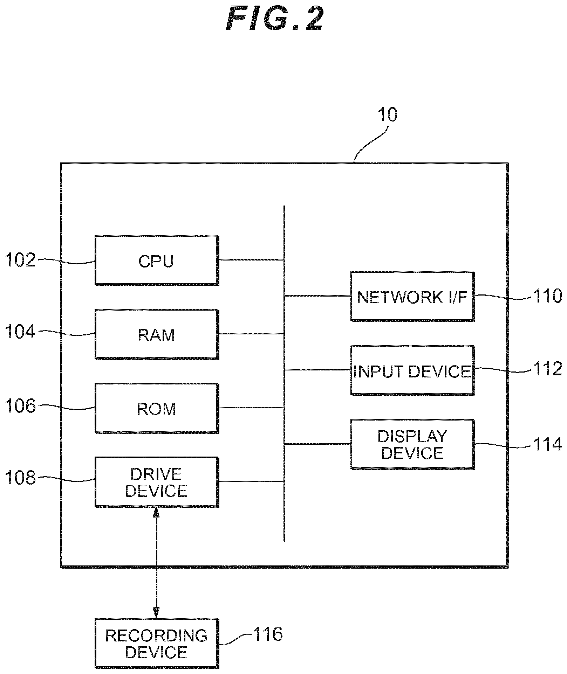

Next, a hardware configuration of an information processing device 10 will be described. Figure 2 is a block diagram illustrating an example of a schematic configuration of hardware of an information processing device 10 according to the embodiment.

As illustrated in Figure 2, the information processing device 10 includes a CPU (central processing unit) 102, a RAM (random access memory) 104, a ROM (read-only memory) 106, a drive device 108, a network I/F 110, an input device 112 and a display device 114. These components are connected via a bus so as to be capable of mutually transmitting and receiving data.

The CPU 102 is a control unit that performs control of the respective devices and a computing operation and/or processing of data, in the computer. Also, the CPU 102 is a computing operation device that executes programs stored in the RAM 104 or the ROM 106. The CPU 102 receives data from, e.g., the input device 112 or the network I/F 110, and performs a computing operation and/or processing of the data and outputs the result thereof to, e.g., the display device 114 or the storage device.

The RAM 104 is, for example, a main storage unit or the like. The RAM 104 is a storage device that stores or temporarily retains programs and data of, e.g., an OS (operating system), which is a basic software executed by the CPU 102, and application software.

The ROM 106 is, for example, a storage device that stores data related to, e.g., the application software. Also, although not illustrated, the information processing device 10 may hold an HDD that can store a large amount of data.

The drive device 108 reads a program from a recording device 116, for example, a CD-ROM, an SD card or the like and installs the program in the storage device.

Also, the recording device 116 stores a predetermined program, and the program stored in the recording device 116 is installed in the information processing device 10 via the drive device 108. The installed program thereby can be executed by the information processing device 10.

The network I/F 110 is an interface between a peripheral device having a communication function and the information processing device 10. Also, the network I/F 110 is connected via, for example, the network N formed by a data transmission channel comprising, e.g., wired and/or wireless lines, such as a LAN (local area network) or a WAN (wide area network).

The input device 112 includes, e.g., a keyboard with cursor keys, number input keys and various function keys, and/or a mouse and/or a slide pad for, e.g., selecting a key on a display screen of the display device 114. Also, the input device 112 is a user interface for the user to provide an operational instruction or input data to the CPU 102.

The display device 114 includes, e.g., an LCD (liquid-crystal display) and provides display according to display-data input from the CPU 102. Here, the input device 112 or the display device 114 may be installed outside the information processing device 10.

The server device 20 may also have a configuration that is similar to that in Figure 2 and further involve an HDD (hard disk drive), and may have no input device 112 or no display device 114, either.

### <Functional configuration>

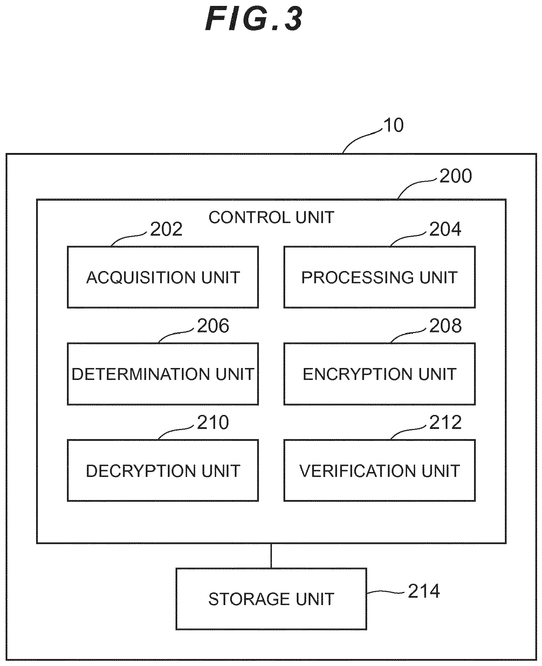

Next, a functional configuration of the information processing device 10 will be described. Figure 3 is a block diagram illustrating an example of a functional configuration of the information processing device 10 according to the embodiment. The information processing device 10 illustrated in Figure 3 includes a control unit 200 and a storage unit 214. The control unit 200 at least includes an acquisition unit 202, a processing unit (also referred to as "processing module") 204, a determination unit 206, an encryption unit 208 and a decryption unit 210. Also, the information processing device 10 may have a verification unit 212. The processing unit 204 may be another information processing device itself or a processing module inside another information processing device.

The control unit 200 can be provided by, for example, the CPU 102, the RAM 104, which serves as a work memory, and the network I/F 110. The control unit 200 has a function that upon execution of the program, performs DRM processing described below.

The storage unit 214 can be provided by, for example, the RAM 104, the ROM 106 and/or the HDD. The storage unit 214 stores data processed by the control unit 200 and also stores, e.g., DRM protection object data acquired from the first information processing device 10A and the second information processing device 10B. For example, the storage unit 214, in the case of the data-user side, stores use-specification data indicating data-use terms for data to be processed by the processing unit 204, and in the case of the data-provider side, stores, e.g., use-policy data. Description will be provided below taking for example a case where the information processing device 10 is on the data-user side.

The acquisition unit (acquisition module) 202 acquires object data with use-policy data indicating data-use terms prescribed by a data provider. This object data is a DRM-protected data, which is transmitted and acquired from, e.g., the server device 20.

The determination unit (determination module) 206 determines whether or not the processing unit 204 can process the acquired object data, based on the use-policy data associated with the object data and the use-specification data stored in the storage unit 214. For example, the determination unit 206 determines whether or not the use policy and the use specifications are simultaneously satisfied. If there are a finite number of criteria for determining simultaneous satisfiability, for example, types of use terms, then the determination unit 206 may hold, for each use term, a list of IDs of other use terms simultaneously satisfied with the use term, for example. The determination unit 206 is a module different from the processing module that is the processing unit204.

If the determination unit 206 determines that the processing unit 204 (processing module) can process the object data, the processing unit 204 processes the object data while meeting the use policy. Consequently, matching of the use terms of the object data can be performed between the data provider and the data user. Types of the processing include, e.g., display of the data, writing of the data, writing of the data to a file in plain text, transmission of the data to the outside in plain text, matching of the data with other data, sharing of the data with another module, retrieval of the data, and various analyses and conversions of the data in combination with other data and accumulation of the results thereof.

Also, the content of the object data may be concealed using any encryption method. If the object data is encrypted using, for example, any known encryption method, the processing unit 204 decrypts the object data to process the processing-object data. Also, if the content of the processing-object data is concealed by secret sharing, the processing unit 204 acquires information on locations of the pieces of shared data from persons who conceal the data and processes the processing-object data based on the location information.

The encryption unit 208 encrypts the data received from the processing unit 204 and stores the encrypted data in the storage unit 214.

The decryption unit 210 decrypts encrypted data. For example, the decryption unit 210 decrypts data stored in the storage unit 214 and provides the decrypted data to the processing unit 204.

For a program (processing module) affixed with an electronic signature, the verification unit 212 compares a hush value generated from the signature decrypted via a public key and a hush value generated from the program to verify the program.

Also, if the processing module is provided outside (the processing module is another information processing device itself or a program inside another information processing device), the verification unit 212 examines data generated by the processing module from data transmitted to the processing module, to verify the processing module.

At this time, if it is verified by the verification unit 212 that the processing module is neither tampered nor counterfeited, the processing unit 204 performs processing of data determined by the determination unit 206 as processable.

If a processing module neither tampered nor counterfeited complies with the use specifications, only a processing module meeting the use specifications can be allowed to process processing-object data.

Here, each of the data-use terms is a logical combination of elementary propositions. Each elementary proposition is such that for certain processing-object data D, a certain type of module subjects a certain range of the processing-object data D to a certain type of processing during a certain period. Examples of a method for the logical combination include, e.g., conjunction, disjunction, negation and quantification.

Also, use terms for a processing module M can include, e.g., a use term that the user of the processing module M shall be a certified professional such as a medical doctor or a lawyer or a member of a predetermined organization. Also, for specifying the processing period and the range of the processing-object data, for example, a retrieval language such as SQL or SPARQL can be used.

### <Data>

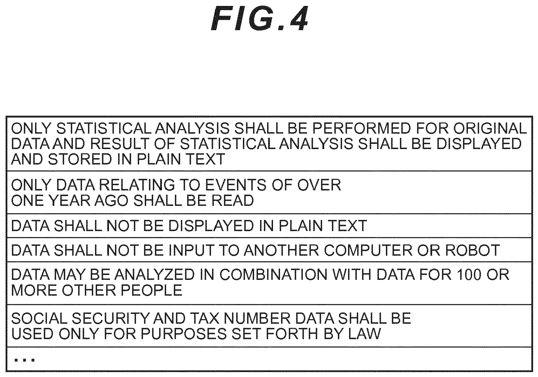

Figure 4 is a diagram indicating several examples of use terms. The examples shown in Figure 4 comprise a list of use terms. When processing-object data is generated on the data-provider side, at least one use term is selected or generated, and associated with the processing-object data as use-policy data. Also, for a processing module used by a data user, at least one use term is set as use-specification data, and the use term is compared with the use-policy data associated with the processing-object data.

Examples of use terms include the following:
- Only statistical analysis shall be performed, and the result of the analysis shall be displayed, and be stored in plain text.
- Addresses, names, phone numbers and e-mail addresses shall be neither written into a file nor transmitted to the outside in plain text.
- Only data of over one year ago shall be read.
- The data shall be neither displayed nor matched with other data.
- The data shall not be accessed on and after a predetermined date.
- Only a module meeting predetermined terms shall access the data.
- The data may be edited.
- The data may be analyzed in combination with other data, but shall not be displayed in plain text.
- Social security and tax number data shall be used only for the purposes set forth by law.

### <Specific Examples>

Next, specific examples of the embodiment will be described. For instance, if use-policy data associated with processing-object data D entails "the data shall not be displayed in plain text" and use-specification data of a processing module M entails "only statistical analysis shall be performed for original data and the result of the analysis shall be displayed and stored in plain text", then the determination unit 206 determines that the processing-object data D can be processed by the processing module M, and the processing unit 204 performs only statistical analysis of the processing-object data D without displaying the processing-object data D in plain text, and displays and stores the result of the analysis in plain text.

On the other hand, when the use-policy data entails "no human being views the plain text data" and the use-specification data entails "the data shall be printed in plain text", the determination unit 206 determines the object data as unprocessable, if the determination unit 206 determines that the use policy and the use specifications are not simultaneously satisfied because a human being will view the plain text data when the plain text data is printed.

As another specific example, where, for example, a patient himself/herself manages his/her medical record data and shares the data with a hospital, the use policy may entail "only employees of the hospital may view and/or edit the data and/or analyze the data in combination of other data". Also, where a person shares a photograph of his/her own with his/her friend or where trade secret data is shared inside a company, a use policy "the data may be displayed but shall not be stored in a file or transmitted to the outside in plain text" may be provided. Also, where an employee of a company shares, e.g., his/her social security and tax number with the company, "the data shall be used only for the purposes set forth by law" may be provided as a use policy.

Also, where a holder of processing-object data D uses a personal terminal (for example, the first information processing device 10A), use policy associated with the object data D may entail "a server (server device 20) that stores the processing-object data D shall not use the processing-object data D, and a personal terminal (for example, the second information processing device 10B) shall use the processing-object data D".

### <Operation>

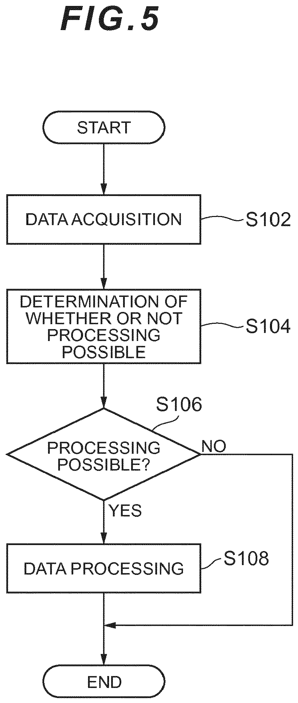

Next, operation of the information processing device 10 will be described. Figure 5 is a flowchart illustrating an example of processing in the information processing device 10 according to the embodiment. The processing indicated in Figure 5 is performed, for example, when data provided with a use policy is acquired from each device.

In step S102, the acquisition unit 202 acquires processing-object data provided with use-policy data indicating data-use terms prescribed by a data provider.

In step S104, the determination unit 206 determines whether or not the acquired processing-object data can be processed by the processing module, based on the acquired use-policy data and use-specification data indicating data to be processed by the processing module (processing unit 204), where the use-specification data is acquired from the storage unit 214.

In step S106, if the determination unit 206 determines that processing-object data can be processed by the processing module (step S106: YES), then the processing proceeds to step S108, and if the determination unit 206 determines that processing-object data cannot be processed by the processing module (step S106: NO), then the processing ends.

In step S108, the processing unit 204 processes the object data determined as processable.

As described above, the embodiment enables matching of terms of use of data between a data provider and a data user. For example, the embodiment enables a data provider to choose a data user prescribng a module suited to the data provider's use policy to provide data.

Also, the embodiment enables a data user to ask for provision of data suited to data specifications of a module that the data user can use, from an unspecified number of data providers.

Also, the embodiment enables a data user to select a module that can properly process provided data (module meeting the use policy) from a group of modules the data user has, or purchase or develop a new such module.

Also, the embodiment enables a data user to perform, e.g., statistical analysis of data provided by many data providers, to the extent allowed by the use policy associated with the data.

Also, the aforementioned program executed by the information processing device 10 is such that upon the CPU 102 reading the program from the ROM 106 and executing the program, one or more units of the above-described units are loaded in the RAM 104 and the one or more units are thereby created in the RAM 104.

As described above, the processing described in the embodiment above may be provided as a program for a computer to execute. The above-described processing can be performed by installing the program from, e.g., a server and causing a computer to execute the program.

Also, the above-described processing can be provided by recording this program on the recording device 116 and causing a computer to read the recording device 116 storing the program recorded therein.

Also, for the recording device 116, any of various types of recording media including a recording device that optically, elastically or magnetically records information such as a CD-ROM, a flexible disk or a magnetooptical disk, and a semiconductor memory that electrically records information such as a ROM or a flash memory can be used.

Although the examples have been described in detail, the present invention is not limited to the above examples, and in addition to the examples, various modifications and alterations are possible within the scope of the claims.

### Reference Signs List

- 20: information processing device
- 102: CPU
- 104: RAM
- 106: ROM
- 202: acquisition unit
- 204: processing unit
- 206: determination unit
- 208: encryption unit
- 210: decryption unit
- 212: verification unit

## Claims

1. An information processing device comprising:
a data processing module that processes data;
an acquisition unit that acquires processing-object data provided with use-policy data indicating a data-use term prescribed by a data provider;
a storage unit that stores use-specification data indicating a data-use term for data that can be processed by the processing module; and
a determination unit that determines, based on the use-policy data and the use-specification data, whether or not the acquired processing-object data can be processed by the processing module,
wherein the processing module processes the processing-object data determined by the determination unit as processable.

2. The information processing device according to claim 1, wherein a content of the acquired processing-object data is concealed using any encryption method.

3. An information processing method comprising the following steps executed by a computer:
an acquisition step of acquiring processing-object data provided with use-policy data indicating a data-use term prescribed by a data provider;
a determination step of determining, based on the use-policy data and use-specification data, whether or not the acquired processing-object data can be processed by a processing module, where the use-specification data indicates a data-use term for data that can be processed by the processing module and is acquired from a storage unit that stores the use-specification data; and
a processing step of processing the processing-object data determined as processable.

4. A program causing a computer to perform:
an acquisition step of acquiring processing-object data provided with use-policy data indicating a data-use term prescribed by a data provider;
a determination step of determining, based on the use-policy data and use-specification data, whether or not the acquired processing-object data can be processed by a processing module, where the use-specification data indicates a data-use term for data that can be processed by the processing module and is acquired from a storage unit that stores the use-specification data; and
a processing step of processing the processing-object data determined as processable.

5. A computer-readable recording medium comprising a program according to claim 4 recorded therein.
